# EUROPÄISCHE PATENTANMELDUNG

(11) **EP 3 092 972 A1**
(43) Veröffentlichungstag der Anmeldung: **16.11.2016**
(21) Anmeldenummer: 15167205.2
(22) Anmeldetag: 11.05.2015
(51) Int. Cl.: A61C 17/06

(54) **VORRICHTUNG ZUR ABSCHEIDUNG VON EDELMETALLPARTIKELN**

(71) Anmelder: Schröder, Ludger, 57462 Olpe (DE)
(72) Erfinder: Schröder, Ludger, 57462 Olpe (DE)
(74) Vertreter: Patentanwälte Dörner & Kötter PartG mbB

(57) **Zusammenfassung**

Die Erfindung betrifft eine Vorrichtung zur Abscheidung von Edelmetallpartikeln aus einem Absaugstrom während einer zahnärztlichen Behandlung, umfassend ein über einen Ablaufanschluss (13) an eine zahnärztliche Absauganlage und über einen Zulaufanschluss (11, 12) einem Absaugschlauch anschließbares externes Gehäuse (1), durch das der Saugstrom führbar ist und das mit Mitteln zum Abscheiden von in dem Saugstrom geförderten Edelmetallpartikeln versehen ist.

## Beschreibung

Die Erfindung betrifft eine Vorrichtung zur Abscheidung von Edelmetallpartikeln aus einem Absaugstrom während einer zahnärztlichen Behandlung nach dem Patentanspruch 1.

In zahnärztlichen Praxen kommen regelmäßig Absauganlagen zum Einsatz, welche eingesetzt werden, um bei Schleif- und Bohrarbeiten an den Zähnen eines Patienten die hierbei abgetragenen Artikel aus dem Behandlungsbereich abzusaugen, um eine freie Sicht auf den Behandlungsbereich zu gewährleisten und ein Verschlucken von Feststoffpartikeln durch den Patienten zu verhindern. Gleichzeitig wird der von den Patienten erzeugte Speichel zusammen mit Spül- und Kühlwasser aus dem Behandlungsbereich mit abgesaugt, wodurch eine weitgehend trockene Arbeitsfläche erzielt wird. An die Absauganlage ist hierzu ein Absaugschlauch angeschlossen, der während der Behandlung im Mundraum des Patienten entsprechend positioniert wird. Dabei kann der durch die Absauganlage abgeführte Absaugstrom u.a. Speichel, Blut, Wasser, Metalle, Kleber, Zemente, Kunststoff sowie Zahn- und Keramikpartikel enthalten.

Beim Bohren oder Schleifen von Amalgamfüllungen werden auch Amalgampartikel abgesaugt. Um zu verhindern, dass diese in das Abwasser gelangen, sind an den Absauganlagen regelmäßig Amalgamabscheider angeordnet, durch die das amalgampartikelbefrachtete Abwasser eingeleitet wird. Innerhalb des Amalgamabscheiders werden die Feststoffpartikel, insbesondere auch die Amalgampartikel durch Sedimentation, Filtration oder nach dem Zentrifugalprinzip abgeschieden. In dem Amalgamabscheider verbleibt so ein Schlamm, in dem der größte Teil der bei der spanenden Bearbeitung von Zähnen und Zahnfüllmitteln in den Absaugstrom gelangenden Festkörper eingebracht ist. Bei der spanenden Bearbeitung von edelmetallhaltigen Kronen, Inlays oder Brücken kommt es zu einem werthaltigen Materialabtrag, dessen Partikel ebenfalls in den Partikelschlamm des Amalgamabscheiders eingehen. Hierdurch kommt es zu einer unerwünschten Entsorgung von Edelmetallmengen, die aus dem amalgamhaltigen Schlamm nur mit großem Aufwand wiedergewonnen werden können.

Hier will die Erfindung Abhilfe schaffen. Der Erfindung liegt die Aufgabe zugrunde, eine Vorrichtung zur Abscheidung von Edelmetallpartikeln aus einem Absaugstrom während einer zahnärztlichen Behandlung bereitzustellen, welche eine einfache Separierung dieser edelmetallhaltigen Partikeln aus dem Absaugstrom ermöglicht. Gemäß der Erfindung wird diese Aufgabe durch die Merkmale des Patentanspruchs 1 gelöst.

Mit der Erfindung ist eine Vorrichtung zur Abscheidung von Edelmetallpartikeln aus einem Absaugstrom während einer zahnärztlichen Behandlung bereitgestellt, die eine einfache Separierung dieser Edelmetallpartikel aus dem Absaugstrom ermöglicht. Durch das über einen Ablaufanschluss an eine zahnärztliche Absauganlage (bzw. an die mit dieser verbundenen zahnärztlichen Behandlungseinheit) und über einen Zulaufanschluss an einen Absaugschlauch anschließbare externe Gehäuse, durch das der Absaugstrom führbar ist und das mit Mitteln zum Abscheiden von in dem Absaugstrom geförderten Edelmetallpartikeln versehen ist, ist eine gezielte Separierung der bei einer spanenden Bearbeitung von edelmetallhaltigen Zahnteilen anfallenden Partikel bewirkt, bevor diese in den Amalgamabscheider gelangen können. Da im Vorfeld bekannt ist, bei welchen Behandlungsarbeiten edelmetallhaltige oder amalgamhaltige Bohr- oder Schleifpartikel anfallen, ist ein gezielter Einsatz dieser adapterartigen externen Vorrichtung bei solchen Behandlungen ermöglicht, bei dem keine Amalgampartikel entstehen. Dabei ist diese externe Vorrichtung vorzugsweise in Art eines Adapters ausgeführt, der zwischen dem Absauganschluss der Behandlungseinheit und dem Absaugschlauch mit Absaugkanüle anschließbar ist.

In Weiterbildung der Erfindung umfassen die Mittel zum Abscheiden einen Siebkörper zur Aufnahme von Edelmetallpartikeln, der bevorzugt einen Vliesfilter umfasst. Die Edelmetallpartikel verfangen sich in dem Vliesfilter, welcher bei ausreichender Befrachtung zur Aufbereitung der in diesem enthaltenen Edelmetallen gegeben werden kann. Das Vorhandensein von eine solche Aufbereitung, insbesondere die Ausscheidung hochwertiger Dentallegierungen stark erschwerenden Amalgampartikeln ist auf diese Weise ausgeschlossen.

In weiterer Ausgestaltung der Erfindung weist der Vliesfilter wenigstens zwei Bereiche mit unterschiedlicher Filterwirkung auf. Dabei weist der Vliesfilter bevorzugt an seinem in Strömungsrichtung des Absaugstroms hinteren Ende einen Abschnitt mit geringerem Querschnitt auf. Hierdurch ist bewirkt, dass die größeren Partikel in dem dickeren, grobmaschigeren Vliesabschnitt gefangen werden, weshalb nur die feineren Partikel zu dem Abschnitt mit geringerem Querschnitt gelangen, welche in diesem bevorzugt dichteren, jedoch dünneren Material ausgefiltert werden können.

Die Mittel zum Abscheiden können auch eine Zentrifuge, insbesondere mit Schneckenform umfassen. Der grundsätzliche Aufbau solcher Zentrifugen ist dem Fachmann bekannt.

In Weiterbildung der Erfindung weisen die Mittel zum Abscheiden ein Flügelrad auf, das oberhalb des Vliesfilters angeordnet ist. Hierdurch ist eine Zentrifugalbeschleunigung der in dem Absaugstrom enthaltenen Partikel bewirkt, wodurch ein effektiver Eintrag der Partikel in den Vliesfilter bewirkt ist. Dabei ist der Vliesfilter bevorzugt trichterförmig ausgebildet, wobei das Flügelrad derart ausgebildet ist, dass eine Beschleunigung der in dem Saugstrom befindlichen Feststoffe in Richtung der Trichterwand des Vliesfilters bewirkt ist.

In Ausgestaltung der Erfindung sind die Mittel zum Abscheiden zumindest teilweise in einer Patrone angeordnet, die innerhalb des Gehäuses lösbar befestigt ist. Hierdurch ist ein einfacher Wechsel der Abscheidmittel, insbesondere des Vliesfilters ermöglicht.

In weiterer Ausgestaltung der Erfindung ist ein Bypass angeordnet, über den der Absaugstrom unter Umgehung der Mittel zum Abscheiden zum Ablaufanschluss leitbar ist. Hierdurch ist ein dauerhafter Anschluss der Vorrichtung ermöglicht. Bei "normalen" Behandlungsvorgängen, insbesondere auch bei der spanenden Bearbeitung von amalgamhaltigen Füllungen, kann der Absaugstrom so direkt an den Amalgamabscheider der Absaugvorrichtung geleitet werden. Eine vorherige Demontage der Vorrichtung ist nicht erforderlich. Vorteilhaft ist der Bypass über eine Weiche mit dem Zulaufanschluss verbindbar. Hierdurch kann durch einfaches Umlegen der Weiche der Absaugstrom durch die Abscheidemittel des externen Gehäuses oder aber direkt zum Amalgamabscheider der Absauganlage gelenkt werden. Ein Anschluss des Absaugschlauchs an einem anderen Zulaufanschluss ist nicht erforderlich.

Gegenstand der Erfindung ist weiterhin eine Patrone zum Einsatz in einer Vorrichtung der vorgenannten Art mit den Merkmalen des Patentanspruchs 12. Die Patrone umfasst ein einen Vliesfilter aufnehmendes Patronengehäuse, das in das externe Gehäuse einbringbar ist und das mit dem Zulaufanschluss des externen Gehäuses verbindbar ist, wodurch ein einfaches Auswechseln der Patrone gewährleistet ist. Durch die Öffnungen des Patronengehäuses, die bevorzugt in Form von Perforationen ausgebildet sind, ist ein Durchtritt des gefilterten Absaugstroms ermöglicht. Bevorzugt ist der Vliesfilter trichterförmig ausgebildet.

In Weiterbildung der Erfindung ist in dem Patronengehäuse oberhalb des Vliesfilters ein Flügelrad angeordnet, dass derart ausgebildet ist, dass eine Beschleunigung der in dem Absaugstrom befindlichen Feststoffe in Richtung der Trichterwand des Vliesfilters bewirkt ist. Hierdurch ist eine funktionelle Einheit gebildet, die als solches auswechselbar ist. Eine Wartung der die Patrone aufnehmenden erfindungsgemäßen Vorrichtung ist so nicht erforderlich. Bevorzugt weist der Vliesfilter an seinem in Strömungsrichtung des Absaugstroms hinteren Ende einen Abschnitt mit geringerem Querschnitt bzw. mit geringerer Schichtdicke auf. Hierdurch ist in diesem Bereich eine erhöhte Durchströmung bewirkt, wodurch eine gute Ausfilterung der in diesem Bereich von großen Partikeln bereinigten Edelmetallpartikel bewirkt ist.

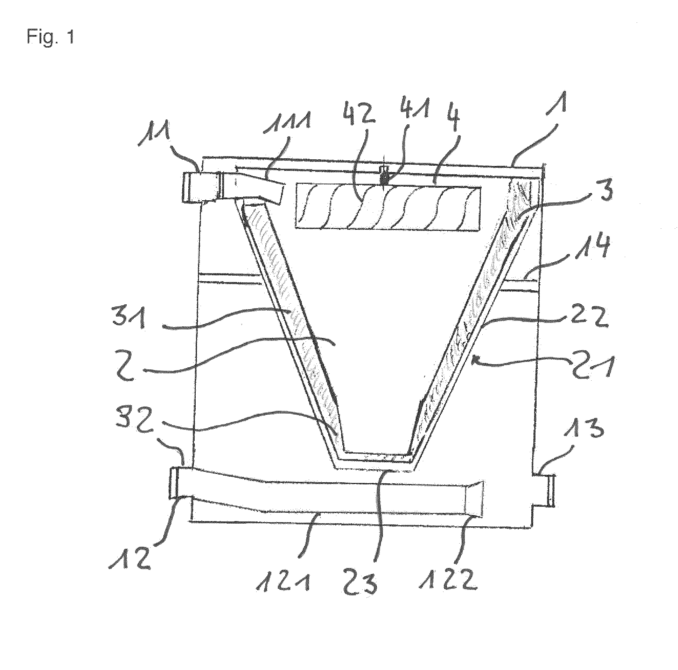

Andere Weiterbildungen und Ausgestaltungen der Erfindung sind in den übrigen Ansprüchen angegeben. Ein Ausführungsbeispiel der Erfindung ist in der Zeichnung dargestellt und wird nachfolgend im Einzelnen beschrieben. Die einzige Figur 1 zeigt die schematische Darstellung einer Vorrichtung zur Abscheidung von Edelmetallpartikeln aus einem Absaugstrom.

Die als Ausführungsbeispiel gewählte Vorrichtung zur Abscheidung von Edelmetallpartikeln aus einem Absaugstrom während einer zahnärztlichen Behandlung umfasst im Wesentlichen ein externes Gehäuse 1 mit einem ersten Zulaufanschluss 11, einem zweiten Zulaufanschluss 12 sowie einem Ablaufanschluss 13, das eine Filterpatrone 2 aufnimmt.

Das externe Gehäuse 1 ist im Wesentlichen quaderförmig ausgebildet und mit einer - nicht dargestellten - Öffnungsklappe zur Bestückung mit einer Filterpatrone 2 versehen. An einer Seite sind in dem externen Gehäuse 1 ein erster Zulaufanschluss 11 sowie beabstandet zu diesem ein zweiter Zulaufanschluss 12 angeordnet, welche Zulaufanschlüsse 11, 12 als Gewindeanschlussstutzen ausgebildet und mit einem selbsttätigen Ventil versehen sind, welches derart ausgebildet ist, dass ein Durchgang nur bei angeschlossenem Anschlussschlauch vorhanden ist. Alternativ können die Zulaufanschlüsse 11, 12 beispielsweise auch als Bajonett-Drehstecker ausgebildet sein. Der erste Zulaufanschluss 11 ist mit einer Einleitungstülle 111 versehen, welche in die eingesetzte Filterpatrone 2 hineinragt. Der zweite Zulaufanschluss 12 mündet in eine Bypassleitung 121, welche endseitig in einen Auslauftrichter 122 übergeht, der beabstandet zum Ablaufanschluss 13 auf diesen ausgerichtet positioniert ist. Weiterhin ist in dem externen Gehäuse 1 innen ein umlaufender Haltesteg 14 zur Aufnahme und Fixierung der Filterpatrone 2 angeordnet. Im Ausführungsbeispiel ist das externe Gehäuse 1 aus Edelstahl hergestellt. Alternativ kann das Gehäuse 1 auch aus Kunststoff hergestellt sein.

Die Filterpatrone 2 umfasst ein in Form eines Hohlkegelstumpfes ausgebildetes Patronengehäuse 21, dessen Mantelfläche 22 unterhalb des Haltesteges 14 des externen Gehäuses 1 perforiert ausgebildet ist. Auch die der Bypassleitung 121 zugewandte Bodenfläche 23 ist mit einer Perforation zur Durchleitung des gefilterten Absaugstroms versehen. In das Patronengehäuse 21 der Filterpatrone 2 ist ein Vliesfilter 3 eingelegt, der an die Mantelfläche 22 sowie die Bodenfläche 23 des Patronengehäuses 21 angelegt ist. Der Vliesfilter 3 weist einen oberen Abschnitt 31 auf, der sich über etwa zwei Drittel der Höhe der Mantelfläche 22 erstreckt und an den sich ein unterer Abschnitt 32 anschließt, der etwa ein Drittel der Mantelfläche 22 sowie die Bodenfläche 23 des Patronengehäuses 21 überdeckt. Der obere Abschnitt 31 des Vliesfilters 3 weist eine grobe Struktur auf, die derart gestaltet ist, das größere Edelmetallpartikel aufgenommen werden können. Der gegenüber dem oberen Abschnitt 31 einen deutlich geringeren Querschnitt aufweisende untere Abschnitt 32 weist hingegen eine feinere, dichtere Struktur auf, welche ausgebildet ist, insbesondere feinere Edelmetallpartikel aus dem Absaugstrom herauszufiltern.

Der Bodenfläche 23 gegenüberliegend ist in das Patronengehäuse 21 ein Flügelrad 4 angeordnet, das auf einer Achse 41 rotierbar gelagert ist. Das Flügelrad 4 ist derart ausgebildet, dass eine Beschleunigung der in dem Saugstrom befindlichen Feststoffe in Richtung des oberen Abschnitts 31 des Vliesfilters 3 bewirkt ist. Die Einleitungstülle 111 des ersten Zulaufanschlusses 11 ist hierzu auf die Flügel 42 des Flügelrades 4 ausgerichtet. Die Filterpatrone 2 sowie das Flügelrad 4 sind im Ausführungsbeispiel als Kunststoffspritzgussteile hergestellt.

Das externe Gehäuse 1 wird mit seinem Ablaufanschluss 13 an den Absauganschluss einer - nicht dargestellten - Behandlungseinheit angeschlossen. Dernicht dargestellte - Absaugschlauch wird sodann mit dem dem Ablaufanschluss 13 gegenüberliegend angeordneten zweiten Zulaufanschluss 12 verbunden. Über die Bypassleitung 121 erfolgt so die Absaugung von Speichel und Feststoffpartikeln direkt über den mit der Behandlungseinheit verbundenen Amalgamabscheider.

Vor der Durchführung einer spanabhebenden Bearbeitung von edelmetallhaltigen Inlays, Kronen, Brücken, Wurzelstiften oder sonstigen Prothetikkomponenten wird der Absaugschlauch lediglich von dem zweiten Zulaufanschluss 12 an den ersten Zulaufanschluss 11 verlegt. Nun wird der Absaugstrom direkt auf das Flügelrad 4 der Filterpatrone 2 gerichtet, wodurch größere Feststoffpartikel in den oberen Abschnitt 31 des Vliesfilters 3 geschleudert werden. Feinere Feststoffpartikel werden über die feinere Vliesstruktur des unteren Abschnitts 32 ausgefiltert. Der so gefilterte Absaugstrom gelangt sodann über die Perforationen des Patronengehäuses 21 zum Ablaufanschluss 13, von wo dieser zu dem mit der Behandlungseinheit verbundenen Amalgamabscheider gelangt. Alternativ kann auch eine Weiche angeordnet sein, welche eine Zuordnung des ersten Zulaufanschlusses 11 bzw. des zweiten Zulaufanschlusses 12 beispielsweise über einen Schieber oder über ein Stellventil ermöglicht, wodurch kein Lösen des Absaugschlauchs mehr erforderlich ist.

Die Filterpatrone 2 kann einfach aus dem externen Gehäuse 1 entnehmen und dessen mit Edelmetallpartikeln befrachteter Vliesfilter 3 einer Scheideanstalt zur Edelmetallaufbereitung zugeführt werden.

## Patentansprüche

1. Vorrichtung zur Abscheidung von Edelmetallpartikeln aus einem Absaugstrom während einer zahnärztlichen Behandlung, umfassend ein über einen Ablaufanschluss (13) an eine zahnärztliche Absauganlage und über einen Zulaufanschluss (11, 12) einem Absaugschlauch anschließbares externes Gehäuse, durch das der Saugstrom führbar ist und das mit Mitteln zum Abscheiden von in dem Saugstrom geförderten Edelmetallpartikeln versehen ist.

2. Vorrichtung nach Anspruch 1, **dadurch gekennzeichnet, dass** die Mittel zum Abscheiden einen Siebkörper zur Aufnahme von Edelmetallpartikeln umfassen.

3. Vorrichtung nach Anspruch 2, **dadurch gekennzeichnet, dass** der Siebkörper einen Vliesfilter (3) umfasst.

4. Vorrichtung nach Anspruch 2, **dadurch gekennzeichnet, dass** der Vliesfilter (3) wenigstens zwei Bereiche (31, 32) mit unterschiedlicher Filterwirkung aufweist.

5. Vorrichtung nach Anspruch 4, **dadurch gekennzeichnet, dass** der Vliesfilter (3) an seinem in Strömungsrichtung des Absaugstroms hinterem Ende einen Abschnitt (32) mit geringerem Querschnitt aufweist.

6. Vorrichtung nach einem der Ansprüche 3 bis 5, **dadurch gekennzeichnet, dass** die Mittel zum Abscheiden ein Flügelrad (4) aufweisen, das oberhalb des Vliesfilters (3) angeordnet ist.

7. Vorrichtung nach Anspruch 6, **dadurch gekennzeichnet, dass** der Vliesfilter (3) trichterförmig ausgebildet ist, wobei das Flügelrad (4) derart ausgebildet ist, dass eine Beschleunigung der in dem Saugstrom befindlichen Feststoffe in Richtung der Trichterwand des Vliesfilters (3) bewirkt ist.

8. Vorrichtung nach einem der vorgenannten Ansprüche, **dadurch gekennzeichnet, dass** die Mittel zum Abscheiden zumindest teilweise in einer Patrone (2) angeordnet sind, die innerhalb des externen Gehäuses (1) lösbar befestigt ist.

9. Vorrichtung nach einem der vorgenannten Ansprüche, **dadurch gekennzeichnet, dass** ein Bypass (121) angeordnet ist, über den der Absaugstrom unter Umgehung der Mittel zum Abscheiden zum Ablaufanschluss leitbar ist.

10. Vorrichtung nach Anspruch 9, **dadurch gekennzeichnet, dass** der Bypass (121) mit einem zweiten Zulaufanschluss (12) verbunden ist.

11. Vorrichtung nach Anspruch 9, **dadurch gekennzeichnet, dass** der Bypass (121) über eine Weiche mit dem ersten Zulaufanschluss (11) temporär verbindbar ist.

12. Patrone zum Einsatz in einer Vorrichtung nach einem der vorgenannten Ansprüche, umfassend ein einen Vliesfilter (3) aufnehmendes Patronengehäuse (2), das in das externe Gehäuse (1) einbringbar ist und das mit dem ersten Zulaufanschluss (11) des externen Gehäuses (1) verbindbar ist.

13. Patrone nach Anspruch 12, **dadurch gekennzeichnet, dass** der Vliesfilter (3) trichterförmig ausgebildet ist.

14. Patrone nach Anspruch 12 oder 13, **dadurch gekennzeichnet, dass** in dem Patronengehäuse (21) oberhalb des Vliesfilters (3) ein Flügelrad (4) angeordnet ist, das derart ausgebildet ist, dass eine Beschleunigung der in dem Saugstrom befindlichen Feststoffe in Richtung der Trichterwand des Vliesfilters (3) bewirkt ist.

15. Patrone nach Anspruch 13 oder 14, **dadurch gekennzeichnet, dass** der Vliesfilter (3) an seinem in Strömungsrichtung des Absaugstroms hinterem Ende einen Abschnitt (32) mit geringerem Querschnitt aufweist.
